Europäisches Patentamt

European Patent Office

Office européen des brevets

(11) Numéro de publication: **0 404 858 B2**

(12) **NOUVEAU FASCICULE DE BREVET EUROPEEN**

(45) Date de publication de nouveau fascicule du brevet: 13.12.95

(51) Int. Cl.⁶: **B22D 41/08**, C04B 35/66

(21) Numéro de dépôt: 89908197.0

(22) Date de dépôt: 28.06.89

(86) Numéro de dépôt internationale :
PCT/FR89/00337

(87) Numéro de publication internationale :
WO 90/00102 (11.01.90 90/02)

(54) **MATERIAU POUR LE RECOUVREMENT D'ORGANES DE COULEE**

(30) Priorité: 01.07.88 FR 8808945

(43) Date de publication de la demande:
02.01.91 Bulletin 91/01

(45) Mention de la délivrance du brevet:
29.07.92 Bulletin 92/31

(45) Mention de la décision
concernant l'opposition:
13.12.95 Bulletin 95/50

(84) Etats contractants désignés:
AT BE DE FR GB IT SE

(56) Documents cités:
EP-A- 0 135 482      EP-A- 0 242 849
DE-A- 2 320 470      DE-A- 2 553 420
DE-A- 3 048 678      DE-A- 3 545 432
FR-A- 985 427        FR-A- 2 007 089
FR-A- 2 529 540      US-A- 4 691 844

Patent Abstracts of Japan, vol.12, no.343 (M-741)(3190), 14.09.1988; & JP-A-64104761 (Tokyo Yogyo Co. Ltd.) 10 May 1988

Patent Abstracts of Japan, vol.12, no.381 (M-752)(3228), 12.10.1988; & JP-A-63132755 (Kawasaki Refract Co. Ltd.) 4 June 1988

(73) Titulaire: **VESUVIUS FRANCE S.A.**
**68, rue de la Gare**
**F-59750 Feignies (FR)**

(72) Inventeur: **FISHLER, Mark Kenneth**
**2220 Sable Oaks**
**Naperville, Illinois 60564 (US)**
Inventeur: **RANCOULE, Gilbert**
**1 Mitchell Grant Way**
**Bedford, MA 01730 (US)**

(74) Mandataire: **Wuillemin, Lucien**
**Vesuvius France S.A.,**
**68 Rue de la Gare**
**F-59750 Feignies (FR)**

EP 0 404 858 B2

## Description

La présente invention a pour objet un nouveau matériau pour le recouvrement d'organe de coulée. Elle concerne plus particulièrement les organes de coulée pour les aciers ou ferroalliages calmés à l'aluminium ou en contenant.

A la suite des opérations de fusion réductrice de l'acier et du convertissage, le métal contient des quantités d'oxygène dissous non négligeables. Cet oxygène est très néfaste notamment lors des opérations de coulée et de travail du métal en général.

Pour supprimer cet oxygène dissous, on utilise des agents calmants. Parmi ces derniers, on peut citer le silicium, le carbone, le magnésium et l'aluminium. C'est surtout ce dernier métal, allié ou non, qui est utilisé pour calmer les aciers et dont le résultat est le meilleur.

Toutefois, lors des opérations de coulée, pour des raisons et dans des conditions encore mal connues, de fines particules d'alumine s'accumulent dans les organes de coulée, tels que par exemple les busettes, pouvant provoquer une obturation quasi-totale et une gêne certaine dans le déroulement normal des systèmes de coulée.

Pour pallier ces difficultés, une première solution consiste à changer fréquemment les organes de coulée où s'accumule l'alumine. Cette solution est coûteuse et réduit considérablement la durée de vie des busettes de coulée, notamment celles qui, dans le cas de la coulée continue, conduisent le métal issu du répartiteur.

Pour augmenter la durée de vie des busettes, une autre solution consiste à réduire autant que faire se peut la quantité d'aluminium à ajouter. Ce palliatif n'est toutefois pas satisfaisant.

Au début des années 1980, des études menées par Emilio Marino et Aldo Ramacciotti conduisaient au brevet français publié sous le n° 2 529 540. Dans ce document, il est indiqué qu'il est possible d'éviter toute accumulation d'alumine dans les busettes, dès lors que ces dernières sont réalisées à partir de chaux avec le cas échéant quelques éléments d'addition. Ces éléments, dont la somme est comprise entre 3 et 25 % en masse sont destinés à favoriser la croissance des grains.

Cette technique, qui certes donne de bons résultats en ce qui concerne l'accumulation de grains d'alumine, présente un inconvénient majeur, celui des précautions nécessaires au stockage et au transport de ces busettes. En effet, un tel matériau réfractaire, composé dans sa très grande majorité, voir à 100 % de chaux vive, est extrêmement réactif vis-à-vis de l'humidité, ce qui provoque une perte de propriété mécanique dès qu'un tel organe de coulée a été soumis à l'humidité.

Le document EP-A-O 135 482 concerne une busette pour la coulée d'acier calmé à l'aluminium. Cette busette est composée de deux parties, à savoir une partie extérieure qui n'est pas en contact avec l'acier et qui peut donc être à base de zircone de manière classique, et une partie intérieure constituée de chaux à 100 %.

C'est pourquoi une nouvelle voie de recherche a été développée, selon laquelle on recouvrait les parties des organes de coulée en contact avec le métal en fusion d'une couche de minéral formant des eutectiques à bas point de fusion avec l'alumine. Ces eutectiques sont lavées et entraînés avec l'aluminepar l'écoulement du métal en fusion.

Cette technique constitue certes une amélioration sensible par rapport aux techniques existantes, toutefois, on remplace l'accumulation d'alumine par une érosion de la couche anti-accumulation d'alumine, ce qui réduit la durée de vie des organes de coulée.

L'abrégé japonais, vol 12, Nr 343, (M-741) (3190) décrit un matériau fritté (clinker) contenant de 50 à 100 % de CaO qui recouvre des surfaces d'un organe de coulée en contact avec un métal liquide.

L'utilisation de matériau composite du type SiAlON apporte un progrès important (cf.D.B.HOGGARD, G.I. RANCOULE, L.C. MYERS, H.K.PARK, M.K. FISHLER- "Development of a liner to reduce alumina buildup in graphitized alumina submerged pouring nozzles used in the continuous casting of steel" publié à la deuxième conférence internationale sur les réfractaires "Refractories '87, TOKYO, Japan, Nov.10-13, 1987" mais non décisif.

C'est pourquoi, un des buts de la présente invention est de fournir un matériau pour recouvrir des organe de coulée qui évitent l'accumulation d'alumine.

Un autre but de la présente invention est enfin de fournir un procédé de coulée de ferro-alliages calmé à l'aluminium ou avec un de ses alliages tel que les alliages aluminium/magnésium utilisant lesdits organes de coulée.

Ces buts et d'autres qui apparaîtront par la suite sont atteints au moyen d'un matériau pour le recouvrement d'organes de coulée d'alliages ferreux calmés à l'aluminium, comportant les caractéristiques énumérées dans la revendication 1. Au cours de l'étude qui a mené à la présente invention, il a été en effet démontré qu'avec une telle composition, au cours de la coulée de ferro-alliage calmé à l aluminium ou avec

2

un de ses alliages tel que les alliages aluminium/magnésium, il se développait au contact du métal riche en aluminium une couche d'un eutectique, ou d'un mélange eutectoïde, dont le rapport alumine/oxyde de calcium est au voisinage de 6:1. Cette douche possède la propriété surprenante de jouer un rôle d'anti-adhésif vis-à-vis de l'alumine et d'adhésif vis-à-vis du matériau mère ; peut être en raison de l'affinité de ce dernier pour le calcium. Ainsi, cette couche empêche toute accumulation d'alumine et restant fixée sur l'organe de coulée protège ce dernier de l'usure par entrainement avec la coulée d'acier ou de ferro-alliage. Ainsi, après la première coulée, pour peu que le ferro-alliage ait été suffisamment riche en aluminium, les faces en contact avec le ferro-alliage couvertes, par ledit matériau sa recouvrent au moins partiellement, par une composition que l'on peut qualifier d'eurectoïde et dont le rapport alumine/chaux vive est au voisinage de 6:1.

Le matériau hôte du calcium, sous la forme d'oxyde, doit avoir de préférence une affinité suffisante pour la chaux pour assurer sa stabilité même en atmosphère relativement humide, c'est-à-dire qu'il doit éviter un phénomène abondamment décrit dans la littérature des réactions thermodynamiques entre produits oxydés et l'eau, selon lequel la réaction de formation de chaux éteinte, est une réaction très fortement exothermique d'hydratation de la chaux vive, cette réaction étant suivie d'un gonflement volumique considérable (capable de briser des liaisons physiques par foisonnement).

Le matériau hôte doit également avoir la propriété d'être suffisamment peu lié à la chaux vive et de libérer suffisamment cette dernière lors de la coulée pour qu'elle puisse s'unir à l'alumine et former, avec d'éventuelles diverses autres impuretés, une phase interfaciale que l'on peut qualifier d'eutectoïde.

Le matériau hôte et la composition calcifère doivent être réfractaires à la température de la coulée être réfractaire. La composition calcifère doit être aussi homogène que possible à l'échelle particulaire et est de préférence réalisée par fusion ou par réaction à l'état solide du matériau hôte avec un composé du calcium tel la chaux vive.

Le matériau hôte peut être utilisé soit pur, soit en présence de faibles quantités d'éléments d'addition.

Le paradigme et le meilleur représentant de matériau hôte est la zircone ($ZrO_2$), c'est pourquoi, ladite composition calcifère comporte de la zircone ($ZrO_2$) dans une proportion variant de 40 à 85 % et de l'oxyde de calcium dans une proportion variant de 15 à 60 % de préférence entre environ 23 et 50. Ces proportions ne tiennent pas compte des agents de liaison utilisés pour assurer la cohésion du matériau. L'organe peut être réalisé soit de manière monobloc par pressage isostatique suivi de la formation des liaisons par frittage à chaud, soit d'être réalisé au moyen d'un insert, l'organe lui-même et l'insert pouvant être cuit de manière séparée. Il est également possible de cuire dans un premier temps l'une des deux pièces et de recuire le tout afin d'assurer une meilleure cohésion entre les pièces. Cette solution présente toutefois le désavantage d'être relativement coûteuse quelque intérêt technique qu'elle ait par ailleurs.

Ces organes sont réalisés par une technique choisie dans le groupe constitué par le pressage isostatique, le pressage uniaxial, le vibrocoulage ou le coulage, suivi d'un frittage en atmosphère réductrice pour la création d'une liaison carbone/carbone pour l'ensemble de l'organe.

La partie de l'organe de coulée qui n'est pas constituée par ledit matériau pour le recouvrement de l'organe, est réalisée selon des techniques connues avec des matériaux connus. En particulier, elle peut être réalisée et l'homme de métier en percevra immédiatement le grand avantage, en des composés de l'alumine et/ou de la zircone, comme cela est le cas pour la plupart de ce type d'appareil.

La présente invention convient particulièrement pour la fabrication de busettes de coulée, et plus particulièrement, celles qui sont des tubes de protection de jet pour la coulée d'alliage ferreux calmé à l'aluminium entre le répartiteur et le dispositif de coulée continue. La busette joue ainsi le rôle de tube de protection de jet.

La présente invention vise également un procédé de coulée continue de ferro-alliage calmé à l'aluminium ou à un de ses alliages, caractérisé par le fait que pour éviter les phénomènes de striction par dépôt de l'alumine dans les organes de coulée, lesdits organes dans leur partie en contact avec la coulée sont recouverts du matériau.

Au cours de ce procédé, une couche de composés eutectoïdes alumine/oxyde de calcium dans un rapport voisin de 6 à 1 se forme au cours de la coulée, cette dernière étant réalisée à une température supérieure à 1400°C.

Dans les nombres ci-dessus, les zéros ne sont pas des chiffres significatifs mais servent simplement à fixer la position des chiffres significatifs.

Quoique dans la présente description il ait été uniquement fait référence à des ferroalliages tels que des aciers, la présente invention s'applique à la coulée de tout métal liquide au cours de laquelle il y a risque d'accumulation d'alumine.

Les exemples non limitatifs suivants permettront à l'homme de l'art de mieux comprendre l'intérêt de la présente invention.

Exemples 1 à 4 :

un matériau de recouvrement selon la présente invention a été réalisé à partir de zircone fondu stabilisé à l'oxyde de calcium avec divers pourcentages d'oxyde de calcium. Le mode opératoire utilisé est le suivant:

Le matériau de zircone-chaux est préalablement mélangé avec du graphite et des adjuvants organiques et minéraux destinés à lui donner les propriétés propres à son utilisation lors du coulage des aciers (entre autre : résistance à l'oxydation, plasticité lors du façonnage, résistance mécanique ...). La mise en forme des matériaux est réalisée par copressage des compositions réfractaires selon la géométrie désirable de la busette de coulée. La pièce devra ensuite subir les cycles de cuissons nécessaires à la réalisation de la liaison carbonée, donnant alors au matériau ses propriétés spécifiques. Les produits pourront suivant l'usage être usinés ou non.

Les compositions des différents matériaux de recouvrement sont rassemblées dans le tableau I ci-après, cependant que les propriétés physiques de la nouvelle couche anti-accumulation sont rassemblées dans le tableau II.

## TABLEAU I

### Composition de couches anti-alumines

|  | Exemple 1 | Exemple 2 | Exemple 3 | Exemple 4 |
|---|---|---|---|---|
| Zircone fondue grenu* (14% CaO) | 48.6 | 44.7 | --- | --- |
| Zircone fondue fin* (14% CaO) | 25.7 | 23.6 | --- | --- |
| Zircone fondue grenu* (26% CaO) | --- | --- | 47.9 | 44.2 |
| Zircone fondue fin* (26% CaO) | --- | --- | 25.3 | 23.4 |
| Graphite | 11.9 | 16.4 | 11.7 | 16.2 |
| Silicium métal | 3.6 | 3.3 | 3.5 | 3.3 |

* produit commercialisé par Cookson Industries

4

TABLEAU II

PROPRIETES PHYSIQUES DE LA COUCHE ANTI-ACCUMULATION

| Exemple | Masse volumique apparente g/cm³ | Densité apparente | Porosité % | Résistance mécanique kg/cm2 | | Classement pour l'accumulation d'alumine | Problème d'érosion | Coefficient de dilatation thermique (X 10⁻⁶ °C) |
|---|---|---|---|---|---|---|---|---|
| | | | | Horiz. Module de rupture | Verti. Module de rupture | | | |
| 1 | 3.22 | 4.05 | 20.5 | 86 ± 13 | 64 ± 5 | 2.7 | Non | 5.73 |
| 2 | 3.16 | 3.78 | 16.4 | 122 ± 14 | 93 ± 6 | 2.3 | Non | 5.00 |
| 3 | 3.21 | 3.84 | 16.3 | 139 ± | 110 ± | 2.0 | Non | 6.17 |
| 4 | 3.09 | 3.64 | 15.1 | 127 ± 9 | 106 ± 2 | 1.8 | Non | 4.70 |

## Revendications

1.  Matériau pour le recouvrement d'organes de coulée d' alliages ferreux calmés à l'aluminium, caractérisé par le fait qu'il est constitué par une composition calcifère susceptible de libérer de l'oxyde de calcium à une température au moins égale à 1400° C, pour que cet oxyde de calcium forme par réaction avec l'aluminium de l'alliage coulé une couche d'une composition alumine-oxyde de calcium dans un rapport situé au voisinage de 6 $Al_2O_3$ pour 1 CaO, adhérant au matériau de recouvrement et évitant le dépôt de particules d'alumine sur ce dernier, ladite composition comportant de la zircone ($ZrO_2$) dans une proportion variant de 40 à 85 % et de l'oxyde de calcium dans une proportion variant de 15 & 60 %, par le fait gue sa teneur en calcium, exprimée en oxyde de calcium est comprise entre

5

environ 10 et environ 60 et par le fait que ladite composition calcifère est liée par frittage au moyen de liant choisi dans le groupe constitué par ceux mettant en oeuvre les liaisons du type carbone/carbone par frittage.

2.  Matériau selon la revendication 1, caractérisé par le fait qu'il est recouvert lui-même par une composition alumine-oxyde de calcium dans un rapport situé au voisinage de 6 $Al_2O_3$ pour 1 CaO.

3.  Organe de coulée d'alliages ferreux calmés à l'aluminium, caractérisé par le fait qu'il est recouvert au moins partiellement par un matériau selon les revendications 1 ou 2 prises séparément.

4.  Organe selon la revendication 3, caractérisé par le fait que la couche de recouvrement de matériau selon les revendications 1 ou 2 prises séparément selon l'une des revendications est réalisée par un insert.

5.  Organe selon la revendication 3, caractérisé par le fait que la couche de recouvrement de matériau selon les revendications 1 ou 2 prises séparément forme avec l'organe un tout monobloc.

6.  Organe selon la revendication 5, caractérisé par le fait qu'il est réalisé par une technique choisie dans le groupe constitué par le pressage isostatique, le pressage uniaxial, le vibrocoulage ou le coulage suivi d'un frittage en atmosphère réductrice pour la création d'une liaison carbone/carbone pour l'ensemble de l'organe.

7.  Organe selon les revendications 3 à 5 prises séparément, caractérisé par le fait qu'il s'agit d'une busette de coulée.

8.  Organe selon la revendication 7, caractérisé par le fait que la busette est un tube de protection de jet pour la coulée d'alliage ferreux calmé à l'aluminium entre le répartiteur et le dispositif de coulée continue.

9.  Procédé de coulée continue de ferro-alliage calmé à l'aluminuim ou à un de ses alliages, caractérisé par le fait que pour éviter les phénomènes de striction par dépôt de l'alumine dans les organes de coulée, lesdits organes sont recouverts dans leur partie en contact avec la coulée du matériau selon l'une des revendications 1 et 2 prises séparément.

10. Procédé selon la revendication 9, caractérisé par le fait qu'une couche de composé alumine/oxyde de calcium dans un rapport voisin de 6 à 1 se forme au cours de la coulée, cette dernière étant réalisée à une température supérieure à 1400°C.

**Claims**

1.  Material for covering casting members for ferrous alloys killed with aluminium, characterized in that it consists of a calciferous composition capable of releasing calcium oxide at a temperature of at least 1400°C in order that this calcium oxide, by reacting with the aluminium of the cast alloy, may form a layer of an alumina-calcium oxide composition in a ratio situated in the neighbourhood of 6 $Al_2O_3$ per 1 CaO, adhering to the covering material and preventing alumina particles from being deposited thereon, the said composition comprising zirconia ($ZrO_2$) in a proportion varying from 40 to 85 % and calcium oxide in a proportion varying from 15 to 60 %, by the fact that its calcium content, expressed as calcium oxide, is between approximately 10 and approximately 60 and by the fact that the said calciferous composition is bonded by sintering by means of a binder chosen from the group consisting of those introducing bonds of the carbon/carbon type by sintering.

2.  Material according to Claim 1, characterized in that it is itself covered by an alumina-calcium oxide composition in a ratio situated in the neighbourhood of 6 $Al_2O_3$ per 1 CaO.

3.  Casting member for ferrous alloys killed with aluminium characterized in that it is at least partially covered by a material according to Claims 1 or 2 taken separately.

4. Member according to Claim 3, characterized in that the covering layer of material according to Claims 1 or 2 taken separately according to one of the claims is produced by an insert.

5. Member according to Claim 3, characterized in that the covering layer of material according to Claims 1 or 2 taken separately forms a single block entity with the member.

6. Member according to Claim 5, characterized in that it is produced by a technique chosen from the group consisting of isostatic pressing, uniaxial pressing, vibrocasting or casting followed by a sintering operation in reductive atmosphere for the creation of a carbon/carbon bond for the whole of the member.

7. Member according to Claims 3 to 5 taken separately, characterized in that it is a casting nozzle.

8. Member according to Claim 7, characterized in that the nozzle is a jet-protection tube for the casting of ferrous alloy killed with aluminium between the distributor and the continuous casting device.

9. Process for continuous casting of ferroalloy killed with aluminium or with one of its alloys, characterized in that, in order to avoid the phenomena of constriction by deposition of alumina in the casting members, the said members are covered in their part in contact with the casting with the material according to one of Claims 1 and 2 taken separately.

10. Process according to Claim 11, characterized in that a layer of alumina/calcium oxide compound in a ratio in the neighbourhood of 6 to 1 is formed during the casting, the latter being carried out at a temperature above 1400 °C.

**Patentansprüche**

1. Überzugsmaterial für Gußelemente von eisenhaltigen, aluminiumberuhigten Legierungen, **dadurch gekennzeichnet**, daß es aus einer kalkhaltigen Zusammensetzung besteht, die fähig ist, Calciumoxid bei einer Temperatur von mindestens 1400 °C freizusetzen, damit dieses Calciumoxid durch Reaktion mit dem Aluminium der gegossenen Legierung eine Schicht aus einer Aluminiumoxid-Calciumoxid-Zusammensetzung in einem Verhältnis von ca. 6 $Al_2O_3$ zu 1 CaO bildet, welche an das Überzugsmaterial anhaftet und die Abscheidung von Aluminiumoxidpartikeln auf letzterem vermeidet, wobei diese Zusammensetzung Zirkonerde ($ZrO_2$) in einem Verhältnis von 40 - 85 % und Calciumoxid in einem Verhältnis von 15 - 60 % enthält, daß sein in Calciumoxid ausgedrückter Calciumgehalt zwischen ungefähr 10 und ungefähr 60 liegt und daß die genannte kalkhaltige Zusammensetzung durch Sintern unter Anwendung eines Bindemittels, gewählt aus der Gruppe derjenigen Bindemittel, die durch Sintern Kohlenstoff/Kohlenstoff-Bindungen ausbilden, gebunden wird.

2. Material nach Anspruch 1, **dadurch gekennzeichnet**, daß es selber mit einer Aluminiumoxid-Calciumoxid-Zusammensetzung in einem Verhältnis von ca. 6 $Al_2O_3$ zu 1 CaO überzogen ist.

3. Gußelement von eisenhaltigen, aluminiumberuhigten Legierungen, **dadurch gekennzeichnet**, daß es mindestens teilweise mit einem Material nach einem einzigen der Ansprüche 1 und 2 überzogen ist.

4. Element nach Anspruch 3, **dadurch gekennzeichnet**, daß die Überzugsmaterialschicht nach einem der Ansprüche 1 oder 2 durch ein Einsatzteil realisiert wird.

5. Element nach Anspruch 3, **dadurch gekennzeichnet**, daß die Überzugsmaterialschicht nach einem der Ansprüche 1 oder 2 zusammen mit dem Element ein Blockgußstück bildet.

6. Element nach Anspruch 5, **dadurch gekennzeichnet**, daß es hergestellt wird durch isostatische Pressung, einachsige Pressung, Vibrogießen oder Gießen mit anschließendem Sintern in Reduktionsatmosphäre zur Schaffung einer Kohlenstoff/Kohlenstoff-Bindung für die Gesamtheit des Elementes.

7. Element nach einem der Ansprüche 3 - 5, **dadurch gekennzeichnet**, daß das Element ein Gießrohr ist.

8. Element nach Anspruch 7, **dadurch gekennzeichnet**, daß es sich bei dem Gießrohr um ein Schutzrohr zum Gießen von eisenhaltigen, aluminiumberuhigten Legierungen zwischen dem Verteiler und der Stranggußvorrichtung handelt.

9. Stranggußverfahren für eisenhaltige, aluminium- oder aluminiumlegierungsberuhigte Legierungen, **dadurch gekennzeichnet**, daß zur Vermeidung der Striktionsphänomene durch Aluminiumoxidablagerungen in den Gußelementen die mit dem Guß in Berührung kommenden Stellen dieses Elementes mit Material nach einem der Ansprüche 1 und 2 überzogen sind.

10. Verfahren nach Anspruch 9, , **dadurch gekennzeichnet**, daß sich im Verlauf des Schmelzvorgangs eine Aluminiumoxid/Calciumoxid-Schicht im Verhältnis von ca. 6 zu 1 während des Gießens bildet, wobei letzteres bei einer Temperatur höher als 1400 ° C ausgeführt wird.